# Europäisches Patentamt

## European Patent Office

## Office européen des brevets

(11) Veröffentlichungsnummer: **0 247 553**
**B1**

(12) **EUROPÄISCHE PATENTSCHRIFT**

(45) Veröffentlichungstag der Patentschrift:
08.08.90

(51) Int. Cl.⁵: **B23D 21/04**

(21) Anmeldenummer: 87107546.1

(22) Anmeldetag: 23.05.87

(54) Vorrichtung zum spanlosen Zertrennen von Rohren.

(30) Priorität: 24.05.86 DE 3617587
07.03.87 DE 3707405

(43) Veröffentlichungstag der Anmeldung:
02.12.87 Patentblatt 87/49

(45) Bekanntmachung des Hinweises auf die Patenterteilung:
08.08.90 Patentblatt 90/32

(84) Benannte Vertragsstaaten:
AT BE CH DE ES FR GB IT LI LU NL

(56) Entgegenhaltungen:
DE-A- 2 916 031
DE-A- 3 118 791
DE-A- 3 214 275
DE-B- 1 752 288
GB-A- 749 389
US-A- 1 930 295
US-A- 3 657 951

(73) Patentinhaber: Demgen, Karl-Willi, Auf der Klosheide 16,
D-5860 Iserlohn(DE)

(72) Erfinder: Demgen, Karl-Willi, Auf der Klosheide 16,
D-5860 Iserlohn(DE)

(74) Vertreter: Patentanwälte Wenzel & Kalkoff,
Flasskuhle 6 Postfach 2448, D-5810 Witten(DE)

## Beschreibung

Die Erfindung betrifft eine Vorrichtung zum spanlosen Abtrennen eines Rohrabschnitts von einem Rohr mit einem ortsfesten, auf einem Dorn gehaltenen Innenmesser auf der Innenseite der Rohrwand und einem daran angrenzenden exzentrisch um etwa die Wandstärke des Rohres beweglichen, das Rohr umgebenden Drehmesser, das sich infolge einer äußerlich aufgebrachten Drehbewegung zu dem Innenmesser abscherend verschiebt.

Eine derartige Vorrichtung ist in der britischen Patentschrift 749 389 beschrieben. Das Drehmesser hat eine Schneidkante, die aus zwei überlagerten Kreisringen zusammengesetzt ist. Der eine Kreisring ist wesentlich größer als der Rohrdurchmesser, während der andere Kreisring das Rohr gerade schmiegend umgibt. Das Drehmesser ist in einer Scheibe gehalten, die mit Hilfe zweier Exzenter eine exzentrische Verschiebung der Schneidkante bei einem Umlauf bewirkt. Dabei ist das Drehmesser sich selbst überlassen, das sich im wesentlichen der Abrollbewegung an dem Rohr folgend in eine bestimmte Winkelstellung verschiebt, die nicht mit der Ausgangsstellung übereinstimmt. Nach dem Schnitt muß das Drehmesser neu ausgerichtet werden, damit ein neuer Rohrabschnitt abgetrennt werden kann.

Bei dünnwandigen Rohren ist ein Stützmesser innerhalb des Drehmessers zur Vermeidung einer Deformierung des Rohres unerläßlich. Eine derartige Vorrichtung kann der deutschen Auslegeschrift 1 932 122 entnommen werden.

Bei dieser Vorrichtung wird jedoch kein exzentrischer Schnitt durchgeführt, sondern der Scherweg wird nach einem geradlinigen Weg umgelenkt und wiederum geradlinig weitergeführt. Damit soll der Nachteil vermieden werden, daß beim Schnitt in einer einzigen Richtung die jeweils außen liegenden Rohrbereiche weniger geschnitten, als vielmehr nur gestaucht werden. Durch die zweite Schnittrichtung soll also quasi das Rohr zunächst oben und unten und dann erst seitlich im Bereich der zweiten Schnittrichtung scherend durchtrennt werden Aufgrund der engen Messer innerhalb und außerhalb der Rohrwandung ist jedoch auch beim ersten Anschnitt in der ersten Schnittrichtung ein Stauchen der seitlichen Bereiche nicht zu vermeiden, so daß an diesen Stellen später ein unsauberer Schnitt festgestellt werden muß. Im übrigen ist das Stützmesser in Scherrichtung frei beweglich gehalten, so daß es weniger eine aktive Schneidwirkung als vielmehr lediglich eine Stützwirkung hervorruft.

Es ist Aufgabe der Erfindung, eine Vorrichtung der eingangs genannten Art so zu verbessern, das sich dünnwandige Rohre unter Zuhilfenahme eines Stützmesser gradfrei schneiden lassen, wobei das Stützmesser aktiv an dem Schnitt von innen heraus beteiligt sein soll.

Zur Lösung dieser Aufgabe schlägt die Erfindung vor, daß ein ortsfestes Außenmesser das Innenmesser umgibt, daß das Drehmesser einen kreisförmigen Innendurchmesser hat, und daß der Dorn im Bereich des Drehmessers eine zur Ausgangslage des Drehmessers zentrische Lagerung aufweist, auf der ein drehbar gelagertes Stützmesser gehalten ist, dessen Schneidkante dieselbe Exzentrizität zu der Lagerung aufweist, wie die des Drehmessers.

Aufgrund der exzentrischen Bewegung des Drehmessers folgt das Stützmesser um den gleichen Betrag exzentrisch auf der Lagerung des Dornes, wobei das Stützmesser die Rotationsbewegung von der Schnittbewegung des Rohrabschnittes aufgezwungen bekommt. Mit jeder vollen Umdrehung des Drehmessers dreht sich auch das exzentrisch gelagerte Stützmesser um eine volle Umdrehung .

Zur leichteren Beibehaltung der ausgefluchteten Ausgangslage kann eine aufhebbare Rastverbindung zwischen dem Stützmesser und einem der umgebenden Bauteile vorhanden sein.

Die Mitnahme des Stützmessers durch den abgetrennten Rohrabschnitt kann insbesondere im Dauerbetrieb zu Schwierigkeiten führen, wenn nämlich aufgrund ungünstiger Reibungsverhältnisse die Mitnahme nicht hundertprozentig gelingt. In Weiterbildung der Erfindung ist daher vorgesehen, daß das Stützmesser in der Betriebslage des Dornes mit dem Drehmesser über einen Formschluß drehfest verbunden ist.

Bei dieser Ausführungsform umgreift die formschlüssige Verbindung den abzutrennenden Rohrabschnitt so daß bei einer direkten Verbindung zwischen dem Stützmesser und dem Drehmesser nur kurze Rohrabschnitte abgetrennt werden können. Selbstverständlich kann mit Hilfe von Verlängerungen und formschlüssigen Verbindungen an den freien Enden der Verlängerungen jeweils an dem Stützmesser und an dem Drehmesser die Länge der maximal abtrennbaren Rohrabschnitte gewählt werden .

Für die formschlüssige Verbindung kommen alle üblichen Bauformen in Frage, also eine Stift-Schlitz-Kombination, eine Schlüsselfläche mit einem entsprechenden Fenster oder Schlüssel, ein Mehrkantprofil als Innen- und Außenprofil sowie eine übliche Außen- und Innenverzahnung.

Da bei der Erfindung das Drehmesser tatsächlich auch eine kreisende Bewegung ausführt, kann es zweckmäßig sein, das Rohr durch eine Klemmbacke auf der dem Durchmesser abgewandten Seite der ortsfesten Messer zu halten zumindest für die Perioden des Drehmesserumlaufes.

Gegebenenfalls ist der das Drehmesser bildende Werkzeugeinsatz innerhalb des Werkzeugträgers drehbar und im wesentlichen spielfrei gelagert, beispielsweise mit Hilfe von Nadellagern. In diesem Fall erfolgt lediglich eine Exzenterbewegung, jedoch keine kreisende Bewegung des Drehmessers; lediglich der Werkzeugträger führt die kreisende Bewegung aus. Dieser Aufwand kann z. B. dann erforderlich sein, wenn die abgetrennten Rohrabschnitte in keinem Fall eine Markierung vom Trennvorgang aufweisen dürfen, also z. B. keine Schleifspuren des Drehmessers im Außenmantel des Rohrabschnittes vorhanden sein dürfen.

Je nach Trennaufgabe kann es zweckmäßig sein, einen definierten Anschnitt herbeizuführen, was beispielsweise durch eine Abflachung an dem Stützmesser erzielt werden kann. Auch die übrigen Messer können eine von der Kreisform abweichende Schneidkante aufweisen, um einen oder mehrere Anschnitte zu erzielen. Die optimale Form kann ggf. durch Versuche ermittelt werden.

Vorzugsweise wird die Schneidkante in dem Messerträger durch einen exzentrisch eingesetzten Werkzeugeinsatz gebildet, der auswechselbar gestaltet sein kann, um die Vorrichtung an unterschiedliche Rohrdurchmesser anzupassen. Da die erforderliche Exzentrizität in erster Linie von der Wandstärke des zu schneidenden Rohres abhängt, kann mit derselben Exzentrizität eine Vielzahl von Rohrdurchmessern abgetrennt werden, wenn entsprechende Messersätze für die ortsfesten Messer und das Dreh- und Stützmesser vorhanden sind. Für starkwandige Rohre sollte dann ein Messerträger bereitgehalten werden der eine abweichende Exzentrizität aufweist, im übrigen jedoch mit denselben Werkzeugeinsätzen bestückbar ist.

Nachfolgend wird ein Ausführungsbeispiel der Erfindung, das in der Zeichnung dargestellt ist, näher erläutert; in der Zeichnung zeigen:

Fig. 1 eine Querschnittsansicht durch eine Vorrichtung gemäß der Erfindung mit einem Schneckenantrieb für einen vollen Umlauf des Drehmessers während des Schneidvorganges;

Fig. 2 eine Schnittansicht entlang der Linie I-I der Fig. 1 der erfindungsgemäßen Vorrichtung in der Ausgangsstellung;

Figur 3 eine Schnittansicht gemäß Figur 2 im Zustand der Vorrichtung gemäß der Figur 1;

Figur 4 eine Ansicht auf die erfindungsgemäße Vorrichtung von der Dornseite her eines weiteren Ausführungsbeispiels und

Figur 5 eine Querschnittsansicht gemäß der Figur 3 des Ausführungsbeispiels gemäß der Figur 4.

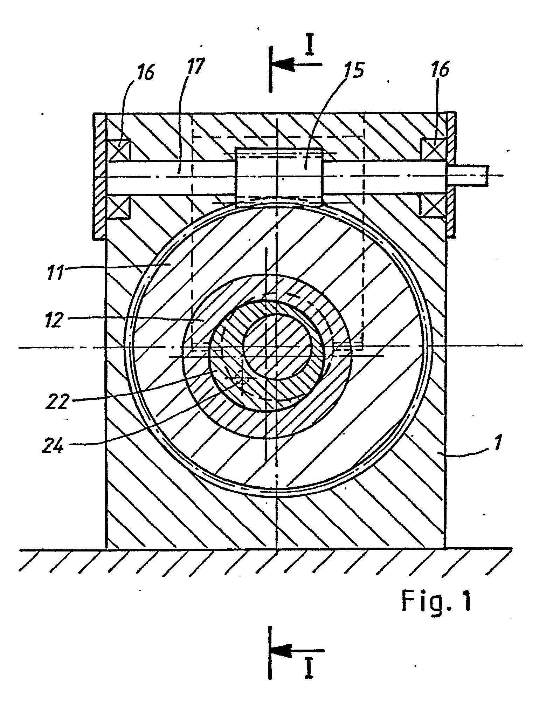

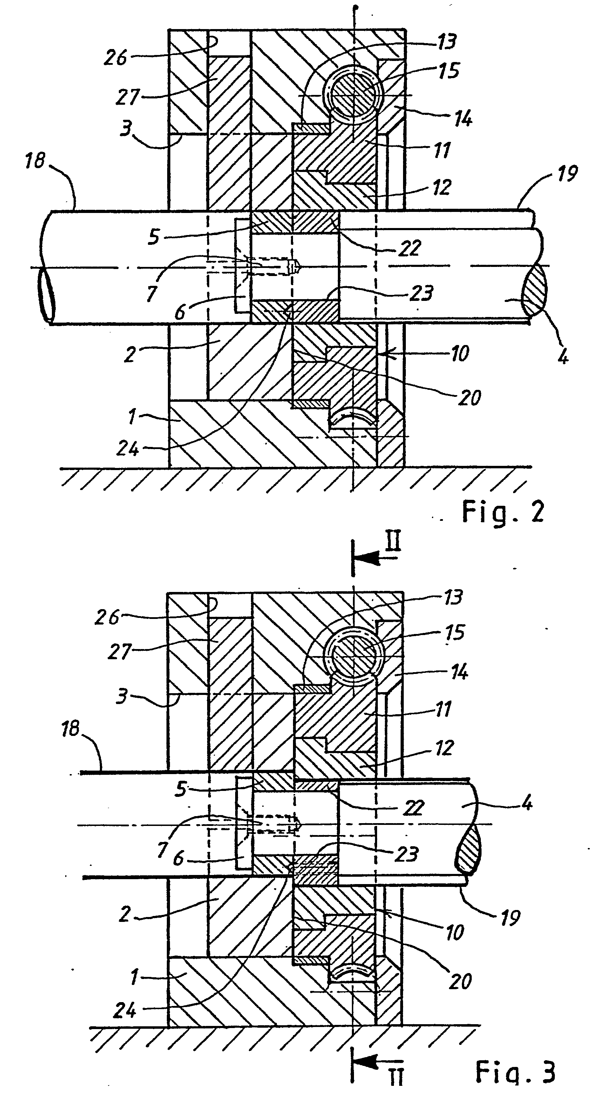

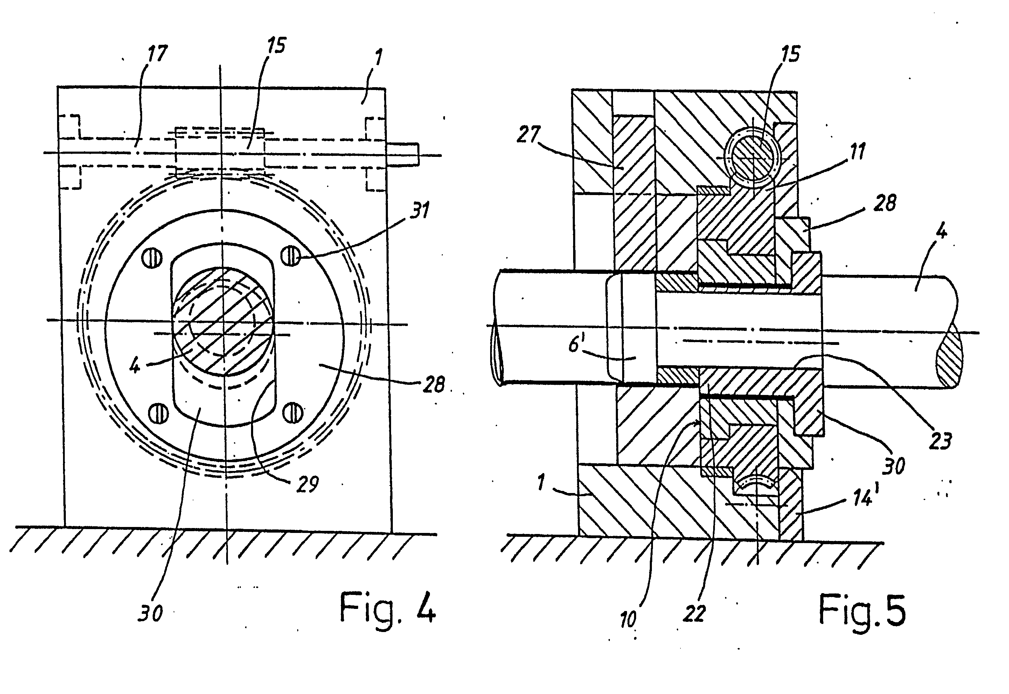

In den Figuren 1 bis 3 ist in zwei Schnittansichten ein Ausführungsbeispiel einer erfindungsgemäßen Vorrichtung dargestellt, wobei sich die Figuren 2 und 3 dadurch unterscheiden, daß einmal die Ausgangsstellung und einmal eine Schnittstellung gezeigt ist; letztere ist auch in der Figur 1 wiedergegeben.

Die Vorrichtung besteht aus einem schematisch angedeuteten Gehäuse 1, das beispielsweise auf einem Ständer, einer Platte, einer Werkbank oder auf einer Konsole als Bestandteil einer Fertigungseinrichtung montiert ist. Innerhalb einer Bohrung 3 ist ein ortsfestes Außenmesser 2 eingesetzt, das aus Werkzeugstahl besteht und in dem Gehäuse 1 festgesetzt ist. Die Festsetzung erfolgt durch Klemmen, durch Fixierschrauben oder auch durch Einpressen, wobei in jedem Fall ein relativ leichtes Auswechseln möglich ist, um den Innendurchmesser dieses ortsfesten Außenmessers 2 an unterschiedliche Rohrdurchmesser anpassen zu können.

In das Innere des ortsfesten Außenmessers 2 ragt ein Dorn 4 hinein, an dessen vorderem Ende ein ortsfestes Innenmesser 5 mit Hilfe einer Scheibe 6 und einer Befestigungsschraube 7 gehalten ist. Der Dorn 4 ist so justiert, daß die der Mitte zugewandte Abschlußseite des Außenmessers 2 und des Innenmessers 5 in ein und derselben Ebene liegen, nämlich in der Trennebene 20. An diese Trennebene 20 schließt sich ein Drehmesser 10 an, das aus einem Messerträger 11, aus einem die Schneidkante tragenden Werkzeugeinsatz 12 und einem in den Messerträger 11 geschnittenen Schneckenrad besteht. Die so gebildete Einheit ist innerhalb eines Bronzeringes 13 gelagert und mit Hilfe eines Deckels 14 in axialer Richtung fixiert. In das Schneckenrad greift eine Schnecke 15 ein, die von einer in Wälzlagern 16 geführten Welle 17 angetrieben wird. Der Antrieb ist nicht dargestellt und besteht beispielsweise aus einem Getriebemotor mit Schnellstopp-Möglichkeit.

Mit den bisher beschriebenen Teilen ist die Vorrichtung gemäß der Erfindung ohne weiteres in der Lage, von einem Rohr 18 einen Rohrabschnitt 19 abzutrennen. Dies gilt insbescondiere für Rohre mit einem relativ großen Durchmesser, wobei die Wandstärke eine untergeordnete Rolle spielt. Dazu wird das Rohr 18 über das ortsfeste Innenmesser 5 in die Vorrichtung hinein über den Dorn 4 aufgeschoben, bezüglich der Länge beispielsweise mit Hilfe eines Anschlages ausgerichtet, und anschließend wird die Schnecke 15 so lange angetrieben, bis das Drehmesser 10 eine volle Umdrehung ausgeführt hat. Dabei schert der exzentrische in dem Messerträger 11 angeordnete Werkzeugeinsatz 12 das Rohr 18 in der Trennebene 20 ab, wobei nach einem Anschnitt ein zunehmender Versatz zwischen dem Rohrstück 19 und dem Rohr 18 entsteht, der schließlich zum gratfreien, glatten Abscheren führt. Nach der Komplettierung der vollen Umdrehung sind das nun abgetrennte Rohrstück 19 und das Rohr 18 wieder zueinander ausgefluchtet, so daß nach der Entnahme des Rohrstückes 19 die Vorrichtung für einen neuen Schnitt bereit ist.

Für einen noch saubereren Schnitt ist es vorteilhaft, innerhalb des Drehmessers 10 ein Stützmesser 22 anzuordnen, das mit einer exzentrischen Bohrung versehen ist und auf einer Lagerung 23 an dem Dorn 4 umlaufen kann. Es ist im Durchmesser dem des ortsfesten Innenmessers 5 angepaßt; beide Messer sind auf den Innendurchmesser des jeweils zu zertrennenden Rohres 18 abgestimmt. Bei Präzisionsrohren ist ein Spiel von 2 bis 3 Zehntel Millimetern vorhanden, bei qualitativ schlechteren Rohren oder bei Rohren mit Längsnähten ist das Spiel wesentlich größer. Das Stützmesser 22 weist keinen eigenen Antrieb auf sondern wird durch die Bewegung des Rohrabschnittes 19 beim Trennvorgang mitgenommen, es dreht sich also bei einem Trennvorgang um eine volle Umdrehung.

Zur Einhaltung der Ausgangslage des Stützmessers 22 beim Laden der Vorrichtung ist eine Rasteinrichtung vorhanden, von der in den Figuren 1 bis 3 eine Pfanne 24 in dem ortsfesten Innenmesser 5 zu erkennen ist. In diese Pfanne rastet eine in dem Stützmesser 22 gehaltene und federbelastete Kugel ein. Diese Rasteinrichtung führt quasi selbsttätig auch eine Restzentrierung aus, wenn am Ende eines Trennvorganges sich das Stützmesser 22 wieder der Ausgangsposition annähert.

In dem dargestellten Ausführungsbeispiel läuft der Werkzeugeinsatz 12 bei einem Trennvorgang um. Ein entsprechendes Moment wird zumindest zu Beginn des Trennvorganges auf das Rohr 18 ausgeübt. Um diesem Moment entgegenzuwirken, ist in einem Schlitz 26 eine Klemmbacke 27 geführt, die beispielsweise mit Hilfe eines Pneumatikzylinders oder dergleichen auf das Rohr aufgesetzt werden kann und so eine Einspannung zwischen sich und dem restlichen ortsfesten Außenmesser 2 herbeiführt. Das Außenmesser 2 ist im übrigen wie auch der Werkzeugeinsatz 12 auf den Außendurchmesser des Rohres 18 abgestimmt, wobei in der Regel ein geringes Spiel von einigen Zehntel Millimetern gewählt wird. Folglich ist zwischen dem Rohr 18 und dem ortsfesten Außenmesser 2 unterhalb der Klemmbacke 27 eine sehr gute Schmiegung vorhanden, die eine Deformation des Rohres an dieser Stelle verhindert.

Das sich drehende Drehmesser 10 kann auf der Außenseite des Rohres gegebenenfalls Schleifspuren oder Riefen erzeugen, die je nach Verwendungszweck des Rohrabschnittes 19 unerwünscht sein können. In diesem Fall empfiehlt sich eine Lagerung des Werkzeugeinsatzes 12 innerhalb des Messerträgers 11, so daß so gut wie keine Relativbewegung zwischen dem Werkzeugeinsatz 12 und dem Rohrabschnitt 19 eintritt, wenn man von der Scherbewegung absieht.

In den Figuren 4 und 5 ist ein weiteres Ausführungsbeispiel der Erfindung wiedergegeben. Bauteile, die mit denen des vorangehend beschriebenen Ausführungsbeispiels übereinstimmen, sind mit denselben Bezugszeichen versehen worden, bei geringen Abweichungen sind die Bezugszeichen indiziert worden. Die Unterscheidung liegt im wesentlichen darin, daß das Stützmesser 22 zwangsweise mit dem Drehmesser 10 zusammen bewegt wird, so daß eine vollkommen synchrone Bewegung beider beweglicher Messer und selbstverständlich bei Bewegbarkeit des Dornes 4 eintritt.

Dazu trägt das Stützmesser 22 an der dem Dorn 4 zugewandten Seite einen Flansch 30 mit zwei sich gegenüberliegenden, seitlichen Führungsflächen bzw. Schlüsselflächen, die von einer Mitnehmerplatte 28 mit einem entsprechend geformten Fenster 29 zur Aufnahme des Flansches 30 bewegt werden ; die Mitnehmerplatte 28 ist mit Hilfe von Schrauben 31 an dem Messerträger 11 befestigt und dreht sich mit ausreichend Spiel innerhalb des Deckels 14'. Wenn der Dorn 4 aus dem Gehäuse 1 zurückgezogen wird, um den abgetrennten Rohrabschnitt freizugeben, löst sich die zwischen dem Flansch 30 und dem Fenster 29 vorherrschende Formschlußverbindung, wobei wiederum eine Kugelrastung, eine Bremse oder eine ähnliche Einrichtung die Winkellage des Stützmessers 22 gegenüber dem Dorn 4 sicherstellt. Nach dem Abziehen des abgetrennten Rohrabschnittes von dem Dorn 4 über die vordere Scheibe 6' wird der Dorn 4 wieder in das Gehäuse 1 eingefahren, wobei der Flansch 30 und das Fenster 28 erneut in Eingriff gelangen. Dabei kann eine an der Vorderkante des Flansches 30 vorgesehene Anfasung (nicht dargestellt) das Auffinden der Sollage erleichtern. Im übrigen können für die formschlüssige Mitnahmeverbindung zwischen der Mitnehmerplatte 28 und dem Stützmesser 22 die unterschiedlichsten Formschlüsse gebildet werden, es kommt lediglich darauf an, daß die Verbindung durch eine axiale Verschiebung des Dornes 4 gelöst werden kann und eine sichere Funktion gewährleistet ist.

Es ist aus der Figur 5 deutlich zu erkennen, daß der Flansch 30 die Länge der abzutrennenden Rohrabschnitte begrenzt. Falls längere Rohrabschnitte erzeugt werden sollen, wird die Länge der Lagerung entsprechend verlängert und zwischen dem Stützmesser 22 und dem Flansch 30 wird eine entsprechende Verlängerung eingesetzt, beispielsweise in Form eines Rohres, das innerhalb der Silhouette des abzutrennenden Rohrabschnittes bleibt. Auch zwischen der Mitnehmerplatte 28 und dem Drehmesser 10 wird eine entsprechende Verlängerung eingesetzt, so daß dann der Flansch 30 sowie die Mitnehmerplatte 28 jeweils an den freien Enden der Verlängerungen angebracht sind. Die Funktion bleibt dann erhalten. Die Verlängerungen liegen ineinander, und im Inneren befindet sich der abzutrennende Rohrabschitt, der selbstverständlich auch kürzer als die dann maximal mögliche Länge eines abzutrennenden Rohrabschnittes sein kann.

Es wurde vorangehend schon erläutert, daß zum Antrieb der Schnecke 15 ein Getriebemotor eingesetzt werden kann, der mit einer Schnellstoppmöglichkeit ausgestattet ist. Abweichend davon kann ein Antriebsmotor mit einer Schnellstoppkupplung eingesetzt werden, deren Funktionsablauf so ist, daß die Schnecke 15 jeweils um eine volle Umdrehung mitgenommen wird, während der Motor durchläuft. In den Ruheperioden wird die Schnecke 15 außerdem in der vorgegebenen Rastposition eindeutig fixiert, so daß eine stets gleiche Start- und Endposition erreicht wird.

## Patentansprüche

1. Vorrichtung zum spanlosen Abtrennen eines Rohrabschnittes von einem Rohr (18) mit einem ortsfesten, auf einem Dorn (4) gehaltenen Innenmesser (5) auf der Innenseite der Rohrwand und einem daran angrenzenden exzentrisch um etwa die Wandstärke des Rohres (18) beweglichen, das Rohr (18) umgebenden Drehmesser (10 ), das sich infolge einer äußerlich aufgebrachten Drehbewegung zu dem Innenmesser (5) abscherend verschiebt, dadurch gekennzeichnet, daß ein ortsfestes Außenmesser (2) das Innenmesser umgibt, daß das Drehmesser (10) einen kreisförmigen Innendurchmesser hat, und daß der Dorn (4) im Bereich des Drehmessers (10) eine zur Ausgangslage des Drehmessers (10) zentrische Lagerung (23) aufweist, auf der ein drehbar gelagertes Stützmesser (22) gehalten ist, dessen Schneidkante dieselbe Exzentrizität zu der Lagerung (23) aufweist, wie die des Drehmessers (10).

2. Vorrichtung nach Anspruch 1, dadurch gekennzeichnet, daß zwischen dem Stützmesser (22) und einer an die Lagerung (23) angrenzenden Fläche des Dornes (4) oder dem ortsfesten Innenmesser (5) eine aufhebbare Rastverbindung (24) zur Festlegung der Ausgangslage vorgesehen ist.

3. Vorrichtung nach Anspruch 2, dadurch gekennzeichnet, daß die Rastverbindung aus einer federnd gelagerten Kugel und aus eine Pfanne (24) besteht.

4. Vorrichtung nach Anspruch 1, dadurch gekennzeichnet, daß die zu dem Innenmesser (5) ausgefluchtete Ausgangslage des Stützmessers (22) durch Federn oder durch eine Gummiringfeder festgelegt ist.

5. Vorrichtung nach einem der vorhergehenden Ansprüche, dadurch gekennzeichnet, daß auf der dem Drehmesser (10) abgewandten Seite des ortsfesten Außenmessers (2) eine Klemmbacke (7) zur Fixierung des Rohres (18) anlegbar ist.

6. Vorrichtung nach einem der vorhergehenden Ansprüche, dadurch gekennzeichnet, daß eines der Messer (2, 5, 12, 22) oder mehrere Messer, insbesondere das Stützmesser (22) eine von der Kreisform abweichende Schneidkante zur Bildung eines Anschnittes oder von Anschnitten aufweisen.

7. Vorrichtung nach Anspruch 1, dadurch gekennzeichnet, daß das Stützmesser (22) in der Betriebslage des Dornes (4) mit dem Drehmesser (10) über einen Formschluß drehfest verbunden ist.

8. Vorrichtung nach Anspruch 7, dadurch gekennzeichnet, daß das Stützmesser und das Drehmesser jeweils eine Verlängerung tragen und daß die formschlüssige, drehfeste Verbindung jeweils an den freien Enden der Verlängerung angebracht ist.

9. Vorrichtung nach Anspruch 7 oder 8, dadurch gekennzeichnet, daß die formschlüssige, drehfeste Verbindung aus einer Stift-Schlitz-Kombination, aus einer Schlüsselfläche mit einem entsprechenden Fenster oder Schlüssel, aus einem Mehrkantprofil oder einer üblichen Außen- und Innenverzahnung gebildet ist.

10. Vorrichtung nach Anspruch 1, dadurch gekennzeichnet, daß die Schneidkante des Drehmessers (10) durch eine Öffnung in einem Messerträger (11) gebildet ist, die zu einem an dem Messerträger (11) für eine Vollumdrehung angebrachten Schneckenrad exzentrisch angeordnet ist.

11. Vorrichtung nach Anspruch 10, dadurch gekennzeichnet, daß die Schneidkante an einem Werkzeugeinsatz (12) in dem Messerträger (11) gebildet ist.

12. Vorrichtung nach Anspruch 11, dadurch gekennzeichnet, daß der Werkzeugeinsatz (12) frei drehbar und im wesentlichen spielfrei in dem Messerträger (11) gelagert ist.

## Claims

1. Apparatus for non-cutting shearing of a pipe section from a pipe (18) having on the inside of the pipe wall a stationary internal blade (5) retained on a mandrel (4) and having a rotary blade (10) which adjoins said internal blade eccentrically, is moveable by approximately the wall thickness of the pipe (18), surrounds the pipe (18) and, as a result of a rotary movement applied externally, is displaced in a shearing manner towards the internal blade (5), characterized in that a stationary external blade (2) surrounds the internal blade, in that the rotary blade (10) has a circular internal diameter, and in that, in the region of the rotary blade (10), the mandrel (4) has a central mounting (23) in relation to the starting position of the rotary blade (10), on which mounting a rotatably mounted support blade (22) is retained, the cutting edge of which has the same eccentricity in relation to the mounting (23) as that of the rotary blade (10).

2. Apparatus according to Claim 1, characterized in that, to fix the starting position, a cancellable catch connection (24) is provided between the support blade (22) and a surface of the mandrel (4) adjoining the mounting (23) or the stationary internal blade (5).

3. Apparatus according to Claim 2, characterized in that the catch connection consists of a resiliently mounted ball and of a pan (24).

4. Apparatus according to Claim 1, characterized in that the starting position of the support blade (22), aligned flush with the internal blade (5), is fixed by springs or by an annular rubber spring.

5. Apparatus according to one of the preceding claims, characterized in that a clamping jaw (27) to fix the pipe (18) can be placed on the side of the stationary external blade (2) acing away from the rotary blade (10).

6. Apparatus according to one of the preceding claims, characterized in that one of the blades (2, 5, 12, 22) or several blades, in particular the support blade (22) have a cutting edge deviating from the circular shape to form a first cut or first cuts.

7. Apparatus according to Claim 1, characterized in that the support blade (22) is connected to the rotary blade (10) via a positive fit fixedly in terms of rotation in the operating position of the mandrel (4).

8. Apparatus according to Claim 7, characterized in that the support blade and the rotary blade each bear an extension, and in that the positive -fit connection, which is fixed in terms of rotation, is applied in each case at the free ends of the extension.

9. Apparatus according to Claim 7 or 8, characterized in that the positive -fit connection, which is fixed in terms of rotation, is formed from a pin/slot combination, from a key surface having a corresponding window or key, from a polygonal profile or a customary outer and inner toothing.

10. Apparatus according to Claim 1, characterized in that the cutting edge of the rotary blade (10) is formed by an opening in a blade carrier (11), which opening is arranged eccentrically in relation to a worm wheel attached to the blade carrier (11) for one complete rotation.

11. Apparatus according to Claim 10, characterized in that the cutting edge is formed on a tool appliance (12) in the blade carrier (11).

12. Apparatus according to Claim 11, characterized in that the tool appliance (12) is mounted freely rotatably and essentially without play in the blade carrier (11).

## Revendications

1. Dispositif pour couper un tronçon de tube sans copeaux à partir d'un tube (18) avec une lame intérieure (5) fixe, maintenue sur un mandrin (4) sur la face intérieure de la paroi du tube et une lame rotative (10) avoisinante, entourant le tube (18) et mobile de manière excentrique d'à peu près l'épaisseur de la paroi du tube (18), qui se déplace en cisaillant par rapport à la lame intérieure (5) par suite d'une rotation appliquée de manière externe, caractérisé en ce qu'une lame extérieure fixe (2) entoure la lame intérieure, que la lame rotative (10) a un diamètre intérieur circulaire et que le mandrin (4) présente, dans la zone de la lame rotative (10) un logement centré (23) par rapport à la position de départ de la lame rotative (10), logement sur lequel est maintenue une lame d'appui (22) pivotante dont le tranchant présente la même excentricité par rapport au logement (23) que celle de la lame rotative (10).

2. Dispositif selon la revendication 1, caractérisé en ce qu'un raccord à encoche (24) qui peut être supprimé est prévu entre la lame d'appui (22) et une surface du mandrin (4) adjacente au logement (23) ou la lame intérieure fixe (5) pour définir la position de départ.

3. Dispositif selon la revendication 2, caractérisé en ce que le raccord à encoche se compose d'une bille logée sur ressort et d'un coussinet (24).

4. Dispositif selon la revendication 1, caractérisé en ce que la position de départ de la lame d'appui (22) alignée sur celle de la lame intérieure (5) est définie par des ressorts ou par un ressort-bague en caoutchouc.

5. Dispositif selon l'une des caractéristiques précédentes, caractérisé en ce qu'une mâchoire de serrage (27) peut être mise en place sur la face de la lame extérieure fixe (2) qui est opposée à la lame rotative (10) pour fixer le tuyau (18).

6. Dispositif selon l'une des revendications précédentes, caractérisé en ce que l'une des lames (2, 5, 12, 22) ou plusieurs lames, en particulier la lame d'appui (22), présentent un tranchant qui diffère de la forme circulaire pour former une entamure ou des entamures.

7. Dispositif selon la revendication 1, caractérisé en ce que la lame d'appui (22) en position de marche du mandrin (4) est reliée à la lame rotative (10) par un clabot de manière à résister à la torsion.

8. Dispositif selon la revendication 7, caractérisé en ce que la lame d'appui et la lame rotative portent chacune un prolongement et que le raccord claboté résistant à la torsion est fixé aux extrémités libres respectives du prolongement.

9. Dispositif selon la revendication 1, caractérisé en ce que le raccord claboté résistant à la torsion est formé par la combinaison d'une goupille et d'une fente, par une surface de clé avec une fenêtre ou une clé correspondante, par un profil polygonal ou par une denture extérieure et intérieure habituelle.

10. Dispositif selon la revendication 1, caractérisé en ce que le tranchant de la lame rotative (10) est formé par une ouverture dans un porte-lames (11) qui est placée excentriquement par rapport à une roue à denture hélicoïdale fixée sur le porte-lames (11) pour une rotation complète.

11. Dispositif selon la revendication 10, caractérisé en ce que le tranchant est formé sur un insert d'outil (12) dans le porte-lames (11).

12. Dispositif selon la revendication 11, caractérisé en ce que l'insert d'outil (12) est positionné dans le porte-lames en étant à rotation libre et substantiellement sans jeu.

Fig. 1

EP 0 247 553 B1

**Fig. 2**

**Fig. 3**

Fig. 4

Fig. 5

EP 0 247 553 B1